# EUROPÄISCHE PATENTSCHRIFT

(11) **EP 1 714 740 B1**
(45) Veröffentlichungstag und Bekanntmachung des Hinweises auf die Patenterteilung: **27.02.2008**
(21) Anmeldenummer: 06007296.4
(22) Anmeldetag: 06.04.2006
(51) Int. Cl.: B24B 27/08, B24B 55/02, B23D 59/02, B28D 7/02

(54) **Trennschleifgerät**
Cutting grinder
Tronçonneuse à meule

(30) Priorität: 20.04.2005 DE 202005006371 U
(43) Veröffentlichungstag der Anmeldung: 25.10.2006
(73) Patentinhaber: Dolmar GmbH, 22045 Hamburg (DE)
(72) Erfinder: Ziegs, Carsten, 22147 Hamburg (DE)
(74) Vertreter: Gerbaulet, Hannes

(56) Entgegenhaltungen:
- DE-U1- 20 304 278
- US-A- 4 182 615
- US-A1- 2004 042 908

## Beschreibung

Die Erfindung betrifft ein Motorgerät mit einer wenigstens ein Düsenelement aufweisenden Nassschneidevorrichtung, wobei das Düsenelement zum Zuführen einer Bindeflüssigkeit für während des Trennvorganges entstehende Staubpartikel vorgesehen ist und an einem Geräteteile des Motorgerätes lösbar befestigbar und demontierbar ist, wie es aus der US 2004/0042908 A1 bekannt ist.

Bei Trennschneidgeräten ist es bekannt und üblich, Schleifscheiben mit Wasser zu nässen, so dass während des Schleifvorgangs entstehender Staub gebunden und die Luftbelastung somit gering gehalten wird.

Hierbei wird ein Nassschneidezubehör eingesetzt, mit dem Wasser mittels Düsen an die Trennscheibe gebracht wird, so dass Staubpartikel nicht die Luft belasten. Die Düsen sind z.B. an einer Schutzhaube befestigt und müssen zu Wartungs-, Umbau- oder Reparaturzwecken demontiert werden. Sowohl bei der Erstmontage als auch zu den genannten Zwecken muss ein Werkzeug eingesetzt werden. In der Praxis hat sich gezeigt, dass dieses Werkzeug bei einer Wartung bzw. einem Umbau nicht zur Verfügung steht. Die Wartung wird deswegen oft unterlassen. Das Nassschneidezubehör arbeitet dann nicht optimal oder bleibt im ungünstigsten Fall ohne Wirkung.

Der Erfindung liegt die Aufgabe zugrunde, ein Motorgerät, insbesondere Trennschneidgerät, zu schaffen bei dem die Wartung erleichtert wird, um die Funktion des Nassschneidezubehörs zu gewährleisten.

Diese Aufgabe wird durch ein Motorgerät, insbesondere Trennschneidgerät, mit den Merkmalen des Anspruches 1 gelöst.

Hierbei ist vorgesehen, dass das Düsenelement werkeuglos formschlüssig mit einem Bajonett-Verschluss an dem Trennscheidgeräteteil befestigbar un demontierbar ist. Unter Geräteteil ist dabei jedes Teil des Motorgerätes, an dem eine sichere und funktionssichere Montage des Düsenelements möglich ist, also beispielsweise die an sich bekannte Schutzhaube, zu verstehen, in der entsprechende Aufnahmeöffnungen ausgebildet sind.

Durch die Erfindung ist eine sichere und zugleich einfache Montage gegeben. Die Anordnung der Düsenelemente kann leicht verändert werden, so dass unterschiedliche Düsenpositionen umzusetzen sind.

Weil kein Werkzeug für eine Demontage und Montage der Düsenelemente bzw. Düsenbefestigungselemente benötigt wird, ist es erheblich wahrscheinlicher, dass eine Wartung der Nassschneidevorrichtung auch tatsächlich erfolgt. Ein Umbau oder Wechsel im Wartungsfall der Düsenelemente ist einfach und bequem.

Außerdem werden durch die erfindungsgemäße werkzeuglose Montage keine zusätzlichen Befestigungsmittel, wie Schrauben oder dergleichen, gebraucht. Daher wird eine geringere Teileanzahl benötigt, was die Herstellungskosten sowie die Montagekosten reduziert, weil weniger Teile zu lagern sind und kürzere Montagezeiten gegeben sind.

Erfindungsgemäß ist das Düsenelement mit einem Bajonett-Verschluss an dem Geräteteil, insbesondere Trennschleifgerätteil befestigbar. Die Bajonett-Lösung hat den Vorteil, dass durch eine geringe Drehung des Düsenelements während der Montage eine schnelle und sichere Festlegung ohne Werkzeug erreicht wird. Damit ein ungewolltes Lösen des Düsenelements verhindert wird, ist es günstig, wenn der Bajonett-Verschluss zusätzlich mit einem Rastfinger versehen ist, welches so ausgebildet ist, dass es an dem Düsenelement oder an dem Geräteteil greift, um eine Verdrehsicherung zu schaffen.

Um einerseits die Positionierung eines Sicherungsringes zu ermöglichen und andererseits biegeelastische Abschnitte zu schaffen, ist es sinnvoll, dass das Düsenelement zwei konzentrisch angeordnete Wandungen aufweist, wobei die innere Wandung einen Düsenkanal bildet und die äußere Wandung als Befestigungswandung ausgebildet ist und von der inneren Wandung beabstandet ist. Die äußere Wandung ist mit Befestigungsabschnitten versehen, während der innere Teil kolben- bzw. bolzenartig ausgebildet ist, um beispielsweise einen Kolben-Bolzen Ring als Sicherungselement anzuordnen.

Ein guter Platz für die Befestigung der Düsenelemente bietet eine Schutzabdeckung bzw. Haube für eine Trennscheibe.

In einer weiteren bevorzugten Weiterbildung der Erfindung sind an der Schutzabdeckung zwei Düsenelemente befestigbar, um an jeder Seite der Trennscheibe die Bindeflüssigkeit aufzutragen. Die Wirkung der Nassschneidevorrichtung wird durch diese einfache Maßnahme erheblich gesteigert, wobei auch ein Wasserverbrauch dadurch reduziert werden kann, weil eine sparsamere Dosierung durch die Seitenverteilung möglich ist.

Eine Nassschneidevorrichtung entfaltet ihre Vorteile am besten bei einem Trennschleifgerät, das für längere Schnitte gebraucht wird und daher mit Stützräder versehen ist. Die Trennscheiben sind größer als bei üblichen Trennschleifern.

Weitere vorteilhafte Ausgestaltungen der Erfindung sind in den Unteransprochen gekennzeichnet.

Ausführungsbeispiele der Erfindung werden anhand der Zeichnung näher erläutert. Es zeigen in rein schematischer Darstellung:
- Fig. 1: in einer perspektivischen Ansicht Trennschleifgerätes mit einem erfindungsgemäßen Nassschneidezubehör,
- Fig. 2: eine Seitenansicht eines Schneidkopfes des in Fig. 1 gezeigten Gerätes,
- Fig. 3: eine Darstellung des Nassschneidezubehörs ohne Trennschneidgerät mit teilweise demontierten Elementen, und
- Fig. 4-6: perspektivische Ansichten einer Ausführungsform eines erfindungsgemäßen Düsenelementes, und
- Fig. 7-10: perspektivische und Seiten- Ansichten einer zweiten Ausführungsform eines erfindungsgemäßen Düsenelementes.

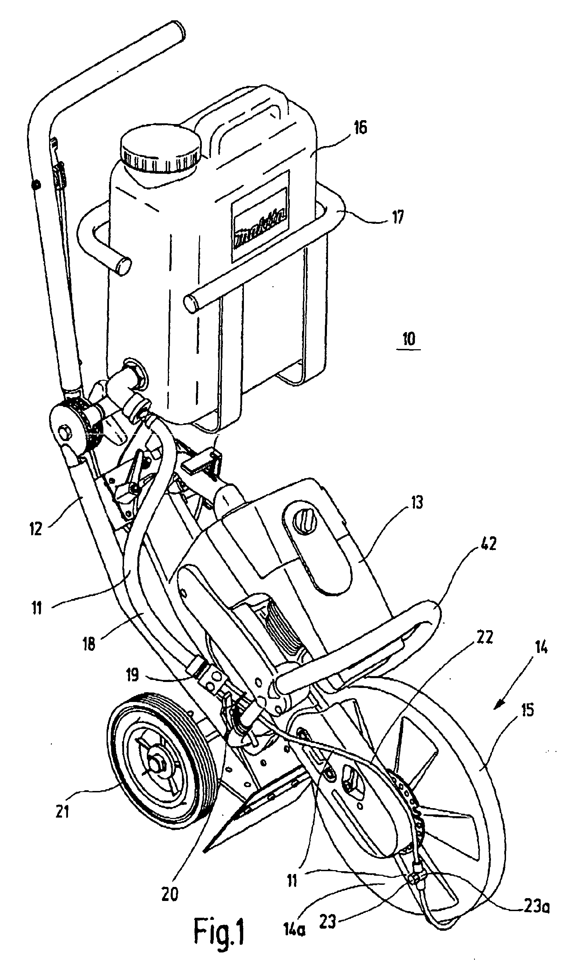

Fig. 1 zeigt eine perspektivische Darstellung eines Trennschleifgerätes 10 mit einem Nassschneidezubehör 11. Das Trennschneidgerät 10 ist montiert auf einem Wagen 12 mit einem Motor 13, vorzugsweise mit einem Verbrennungsmotor 13. Der Motor 13 treibt eine an einem Schleifkopf 14 angeordnete Trennscheibe 14a an, die durch eine Schutzhaube 15 teilweise umgeben ist. Unterhalb des Wagens 12 befinden sich Stützräder 21, die das Gerät 10 tragen.

Das Nassschneidezubehör 11 umfasst einen Wassertank 16, welcher durch eine Halterung 17 am Wagen 12 gehalten wird. Vom Wassertank 16 geht ein Schlauch 18 aus, der über ein Kupplungsteil 19 und ein Ventil 20 sowie einen Schlauch 22 führt. Am Schlauch 22 sind zwei Düsenelemente 23 angeordnet, die an der Schutzhaube 15 befestigt sind.

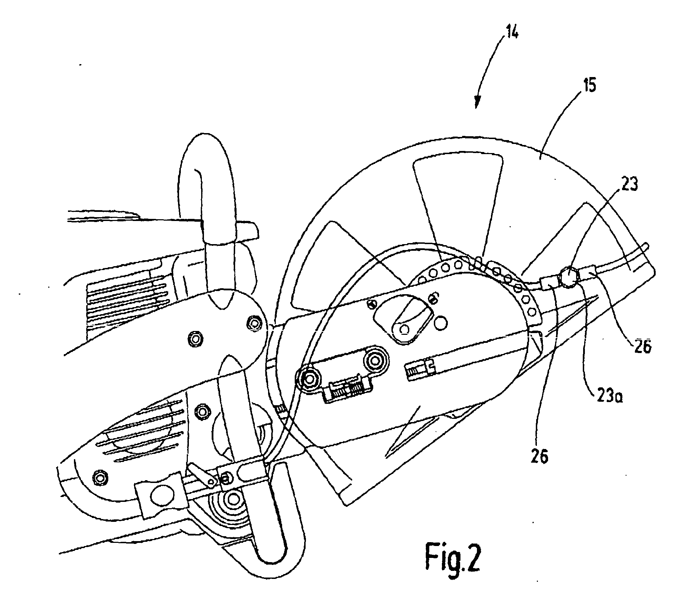

Die Düsenelemente 23 sind zum Zuführen der Bindeflüssigkeit (Wasser) für während eines Schleifvorganges bzw. Trennvorganges entstehende Staubpartikel vorgesehen und sind zum Beispiel für Wartungszwecke an der Schutzhaube 15 (Trennschleifgerätteil) lösbar befestigbar und demontierbar. Fig. 2 zeigt eine vergrößerte Darstellung der Schutzhaube 15 bzw. des Schleifkopfes 14.

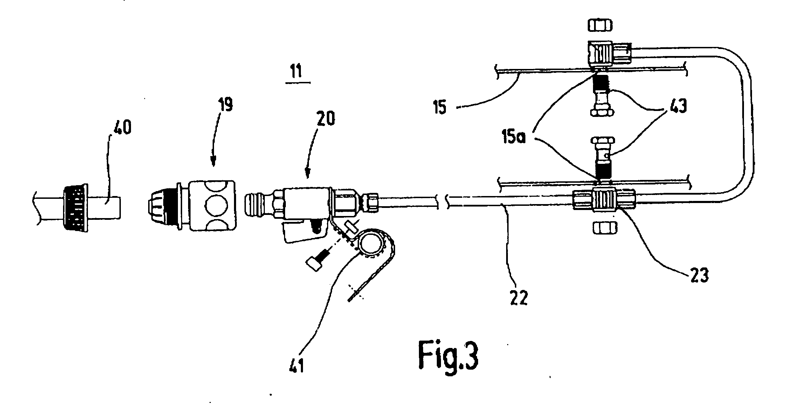

Fig. 3 zeigt das Nassschneidezubehör 11 ohne Trennschneidgerät10. Dieses besteht aus einem Schlauch 40, dem Kupplungsteil 19, dem Ventil 20, einem Befestigungsmittel 41, dem Schlauch 22, den Düsenelementen 23 und der Schutzhaube 15 mit den Aufnahmeöffnungen 15a. Wie Figur 3 zeigt, können die Düsenelemente 23 (Düsenbefestigungselemente) mit abnehmbaren Düsen 43 versehen sein.

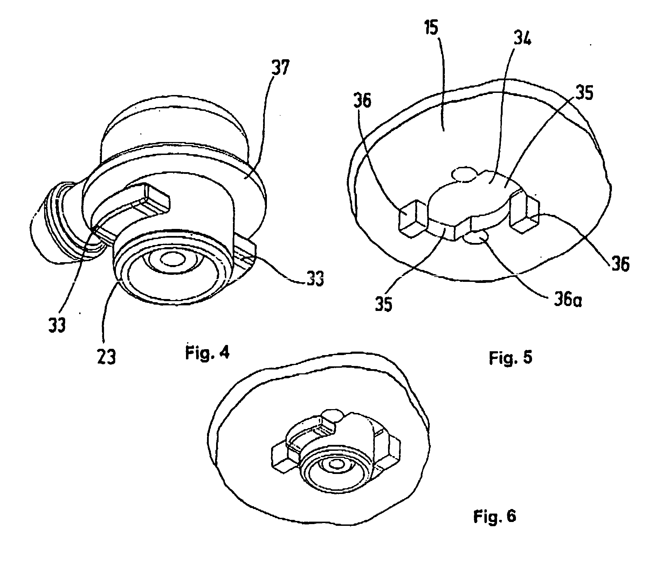

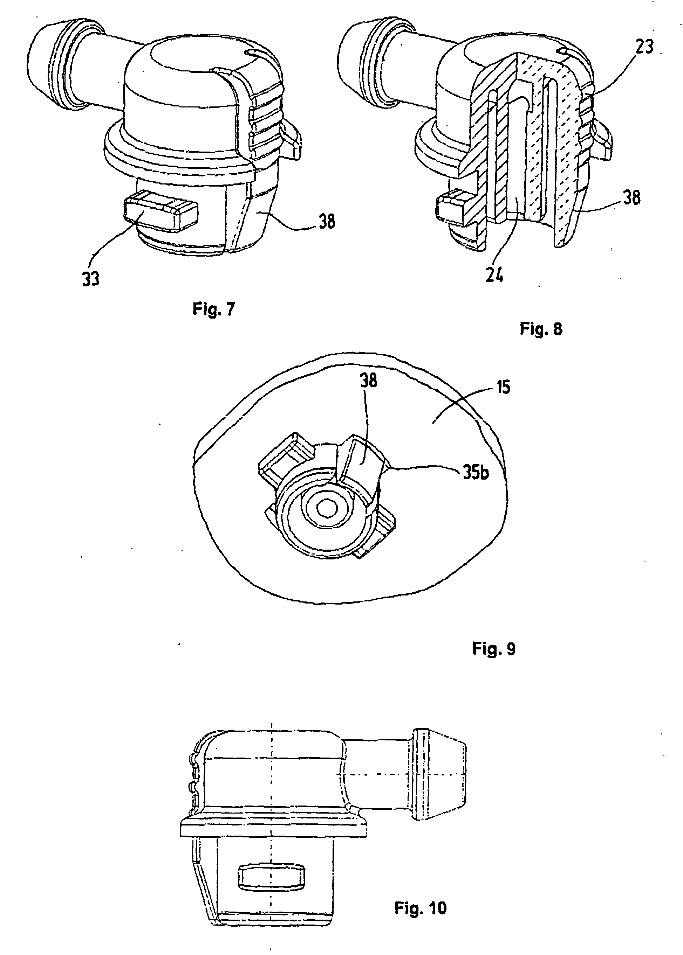

Die Figuren 4 - 6 veranschaulichen eine erste Ausführungsform des erfindungsgemäßen Düsenelementes 23. Erfindungsgemäß sind die Düsenelemente 23 werkzeuglos formschlüssig an der Schutzhaube lösbar befestigbar und demontierbar. Bei dieser Lösung wird das Düsenelement mit einem Bajonett-Verschluss an der Schutzhaube 15 befestigt. Das Düsenelement 23 trägt zwei gegenüberliegende Zapfen 33, wie Fig. 10 zeigt. Diese werden durch die Öffnung 34 der Schutzhaube 15 gesteckt. Die Öffnung 34 ist hierfür mit zwei Bajonett-Einschnitten 35 versehen. Zwei Anschläge 36 begrenzen eine Drehbewegung des Düsenelementes um 90°, wie Fig. 12 zeigt. Die in Fig. 11 dargestellten zwei "Höcker" 36a müssen bei der Drehbewegung überwunden werden. Sie verhindern ein unbeabsichtigtes Herausdrücken und -fallen des Düsenelements 23.

Die Figuren 7 - 10 zeigen eine zweite Ausführungsform eines erfndungsgemä-ßen Düsenelementes 23. Hier ist der Bajonett-Verschluss zusätzlich mit einem Sicherungsfinger 38 versehen, welcher so ausgebildet ist, dass er an der Öffnung 34 angreift, um eine Verdrehsicherung zu schaffen. Die Öffnung 34 hat einen zusätzlichen Verriegelungseinschnitt 35b für den Sicherungsfinger 38. In der Verschlussposition (Fig. 9) greift der Finger 38 in den Verriegelungseinschnitt 35b und verhindert ein Verdrehen bis dieser wieder nach innen gedrückt wird.

Bei allen Fingern 27, 38 kann eine strukturierte Fläche vorhanden sein, um das Greifen zu erleichtern.

### Liste der Bezugszeichen

- 10: Trennschleifgerät
- 11: Nasschneidezubehör
- 12: Wagen
- 13: Motor
- 14: Schleifkopf
- 14a: Trennscheibe
- 15: Schutzhaube
- 15a: Öffnung
- 16: Wassertank
- 17: Halterung
- 18: Schlauch
- 19: Kupplungsteil
- 20: Ventil
- 21: Stützräder
- 22: Schlauch
- 23: Düsenelemente
- 23a: zwischenliegendes Düsenelement
- 33: Zapfen
- 34: Öffnung
- 35: Bajonett-Einschitte
- 35b: Verriegelungseinschnitt
- 36: Anschläge
- 36a: Höcker
- 37: Anlagefläche
- 38: Sicherungsfinger
- 40: Schlauch
- 41: Befestigungsmittel
- 42: Frontgriff
- 43: mittels Werkzeug abnehmbare Düse (Stand der Technik)

## Patentansprüche

1. Motorgerät mit einer wenigstens ein Düsenelement (23) aufweisenden Nassschneidevorrichtung (11), wobei das Düsenelement (23) zum Zuführen einer Bindeflüssigkeit für während eines Trennvorganges entstehende Staubpartikel vorgesehen ist und an einem Geräteteil des Motorgerätes (10) lösbar befestigbar und demontierbar ist, **dadurch gekennzeichnet, dass** das Düsenelement (23) werkzeuglos formschlüssig mit einem Bajonett-Verschluss an dem Geräteteil befestigbar ist.

2. Motorgerät nach Anspruch 1, **dadurch gekennzeichnet, dass** der Bajonett-Verschluss zusätzlich mit einem Rastfinger (38) versehen ist, welcher so ausgebildet ist, dass es an dem Düsenelement (23) oder an dem Geräteteil angreift, um eine Verdrehsicherung zu schaffen.

3. Motorgerät nach einem der Ansprüche 1 oder 2, **dadurch gekennzeichnet, dass** das Motorgerät als Trennschneidgerät (10) eine Schutzabdeckung (15) für eine Trennscheibe (14a) aufweist.

4. Motorgerät nach Anspruch 3, **dadurch gekennzeichnet, dass** an der Schutzabdeckung (15) zwei Düsenelemente (23) befestigbar sind, um an jeder Seite der Trennscheibe (14a) die Bindeflüssigkeit aufzubringen.

## Claims

1. Motorised unit with a wet-cutting device (11) having at least one nozzle element (23), wherein the nozzle element (23) is provided for supplying a binding liquid for dust particles produced during a cutting process and can be releasably fixed to and detached from a unit part of the motorised unit (10),
**characterized in that**
the nozzle element (23) can be fastened to the unit part with a positive-locking bayonet connection, without using a tool.

2. Motorised unit according to Claim 1,
**characterized in that**
the bayonet connection is additionally provided with a locking finger (38), which is constructed in such a way that that it engages with the nozzle element (23) or with the unit part, in order to provide protection against rotation.

3. Motorised unit according to one of Claims 1 or 2,
**characterized in that**
the motorised unit, in the form of a disc cutting device (10), has a protective covering (15) for a cutting disc (14a).

4. Motorised unit according to Claim 3,
**characterized in that**
two nozzle elements (23) can be fixed to the protective covering (15), in order to apply the binding liquid to each side of the cutting disc (14a).

## Revendications

1. Appareil à moteur, avec au moins un dispositif de coupage par voie humide (11) comportant un élément de buse (23), cet élément de buse (23) étant prévu pour l'alimentation en un liant destiné aux particules de poussières qui résultent d'un processus de séparation, et pouvant être fixé de manière amovible sur une pièce d'appareil de l'appareil à moteur (10), **caractérisé en ce que** l'élément de buse (23) peut être fixé sur la pièce d'appareil à l'aide d'un joint à baïonnette, sans outil mais par complémentarité de forme.

2. Appareil à moteur selon la revendication 1, **caractérisé en ce que** le joint à baïonnette est en outre pourvu d'un doigt d'enclenchement (38), qui est conçu de façon à s'engager dans l'élément à buse (23) ou dans la pièce d'appareil, afin de réaliser un blocage de rotation.

3. Appareil à moteur selon l'une des revendications 1 ou 2, **caractérisé en ce que** l'appareil à moteur, en tant qu'appareil à tronçonner (10), comporte un cache de protection (15) destiné à un disque de tronçonnage (14a).

4. Appareil à moteur selon la revendication 3, **caractérisé en ce que** deux éléments de buse (23) peuvent être fixés sur le cache de protection (15), afin d'appliquer le liant de chaque côté du disque de tronçonnage (14a).
